(19) Europäisches Patentamt
European Patent Office
Office européen des brevets

(11) Veröffentlichungsnummer: **0 220 411**
**A1**

(12) # EUROPÄISCHE PATENTANMELDUNG

(21) Anmeldenummer: **86111691.1**

(22) Anmeldetag: **23.08.86**

(51) Int. Cl.⁴: **C 08 G 18/08**, C 08 G 18/50, C 08 G 18/38

(30) Priorität: **05.09.85 DE 3531660**

(43) Veröffentlichungstag der Anmeldung: **06.05.87 Patentblatt 87/19**

(84) Benannte Vertragsstaaten: **BE DE FR GB IT NL**

(71) Anmelder: **BAYER AG, Konzernverwaltung RP Patentabteilung, D-5090 Leverkusen 1 Bayerwerk (DE)**

(72) Erfinder: **Rasshofer, Werner, Dr., Leopold-Gmelin-Strasse 51, D-5000 Köln 80 (DE)**
Erfinder: **Wussow, Hans-Georg, Dr., Benrode-Strasse 51, D-4000 Düsseldorf 13 (DE)**
Erfinder: **Reiff, Helmut, Dr., Paul-Klee-Strasse 68I, D-5090 Leverkusen (DE)**

(54) **Formkunststoffe auf Polyurethanbasis, ein Verfahren zu ihrer Herstellung und aus diesen Formkunststoffen bestehende Schuhsohlen.**

(57) Gegebenenfalls zellförmige Formkunststoffe auf Polyurethanbasis mit einer kompakten Oberfläche, die von 0,01 bis 3 Gew.-% an in das Polyurethangerüst eingebauten Sulfonatgruppen $-SO_3^-$ aufweisen, ein Verfahren zu ihrer Herstellung durch Umsetzung in geschlossenen Formen eines Reaktionsgemischs aus einer Polyisocyanatkomponente, organischen Verbindungen mit gegenüber Isocyanatgruppen reaktionsfähigen Gruppen und den an sich bekannten Hilfs- und Zusatzmitteln, wobei man als Verbindungen mit gegenüber Isocyanatgruppen reaktionsfähigen Gruppen solche (mit)verwendet, die außer mindestens zwei gegenüber Isocyanatgruppen reaktionsfähigen Gruppen mindestens eine chemisch eingebaute Sulfonatgruppe aufweisen, und antistatisch ausgerüstete, aus derartigen Formkunststoffen bestehende Schuhsohlen.

EP 0 220 411 A1

BAYER AKTIENGESELLSCHAFT 5090 Leverkusen, Bayerwerk
Konzernverwaltung RP
Patentabteilung Wr/em-c

# Formkunststoffe auf Polyurethanbasis, ein Verfahren zu ihrer Herstellung und aus diesen Formkunststoffen bestehende Schuhsohlen

Die Erfindung betrifft chemisch eingebaute Sulfonatgruppen aufweisende Formkunststoffe auf Polyurethanbasis, die, hervorgerufen durch die eingebauten Sulfonatgruppen, antistatische Eigenschaften aufweisen, ein Verfahren zur Herstellung von derartigen Formkunststoffen und aus ihnen bestehende Schuhsohlen.

Gegebenenfalls zellförmige Formkunststoffe auf Polyurethanbasis mit einer kompakten Oberfläche bzw. ihre Herstellung gehören zum längst bekannten Stand der Technik (vgl. z.B. US-PS 4 065 410, US-PS 4 218 543, US-PS 3 726 952, GB-PS 1 365 215, US-PS 4 033 912, US-PS 4 024 090, US-PS 4 058 492, US-PS 4 098 731, EP-A-17 928, EP-A-44 481, EP-A-69 286 oder DE-OS 3 133 859). Unter Formkunststoffen auf "Polyurethanbasis" sind in diesem Zusammenhang

nicht nur reine Polyurethankunststoffe zu verstehen, wie sie durch Umsetzung von organischen Polyisocyanaten mit organischen Polyhydroxylverbindungen erhalten werden, sondern auch solche Kunststoffe, bei deren Herstellung ein Teil der Isocyanatgruppen der Ausgangspolyisocyanate mit Polyhydroxylverbindungen unter Urethanbildung und ein anderer Teil der Isocyanatgruppen unter Trimerisierung (Isocyanuratbildung) und/oder mit Aminogruppen aufweisenden Reaktionspartnern unter Harnstoffbildung abreagiert werden. Diese Formkunststoffe auf Polyurethanbasis können in weicher, halbharter oder harter Einstellung hergestellt werden. Insbesondere die elastomeren, gegebenenfalls zellförmigen "halbharten" Formkörper auf Polyurethanbasis werden seit vielen Jahren u.a. zur Herstellung von Schuhsohlen verwendet. Ein Nachteil dieser Kunststoffe ist jedoch in ihrem hohen elektrischen Isolationswiderstand zu sehen, der zur elektrostatischen Aufladung der aus ihnen bestehenden Schuhsohlen und den damit verbundenen nachteilhaften Effekten (elektrostatische Entladungen) führt. Es besteht somit ein Bedürfnis, gegebenenfalls zellförmige Formkunststoffe auf Polyurethanbasis mit kompakter Außenhaut, insbesondere solche einer halbharten, elastomeren Einstellung, wie sie als Schuhsohlen verwendet werden, antistatisch auszurüsten, um die genannten Nachteile zu beseitigen.

Ein gewisser diesbezüglicher Fortschritt ist in der Mitverwendung von gewissen Ammoniumsalzen der Ethylschwefelsäure zu sehen, die von der Firma ABM-CHEMICALS LTD., England, unter der Bezeichnung (®) CATAFOR vertrieben

werden, siehe auch A. Lerner, JOURNAL of CELLULAR PLASTICS, (1985), S. 31-34). Obwohl sich diese Produkte in der Praxis bewährt haben, ist ihr Einsatz noch mit einigen verbesserungswürdigen Nachteilen behaftet. So wird beispielsweise bei Mitverwendung dieser Zusatzmittel ein im Vergleich zu entsprechenden, nicht antistatisch eingestellten Polyurethan-Formköpern unerwünschter Härteabfall beobachtet.

Es war daher die der Erfindung zugrunde liegende Aufgabe, neue Formkörper auf Polyurethanbasis aufzufinden, welche antistatisch ausgerüstet sind, so daß sie insbesondere den Forderungen von DIN 4843 für Sicherheitsschuhe (Isolationswiderstand < $10^8$ Ω) erfüllen, ohne daß die antistatische Ausrüstung die anwendungstechnischen Eigenschaften der Kunststoffe nachteilhaft beeinflußt.

Diese Aufgabe konnte mit der Bereitstellung der nachstehend näher beschriebenen erfindungsgemäßen Polyurethanformkörper bzw. des Verfahrens zu ihrer Herstellung gelöst werden.

Gegenstand der Erfindung sind gegebenenfalls zellförmige Formkunststoffe auf Polyurethanbasis mit einer kompakten Oberfläche, gekennzeichnet durch einen Gehalt an chemisch in das Polyurethangerüst eingebauten Sulfonatgruppen-$SO_3^-$ von 0,01 bis 3,0 Gew.-%.

Gegenstand der Erfindung ist auch ein Verfahren zur Herstellung dieser Formkörper durch Umsetzung eines Reaktionsgemisches in geschlossene Formen, bestehend aus

a) einer Polyisocyanatkomponente,

b) organischen Verbindungen mit gegenüber Isocyanatgruppen reaktionsfähigen Gruppen des Molekulargewichtsbereichs 400 bis 20 000,

gegebenenfalls

c) im Sinne der Isocyanat-Additionsreaktion mindestens difunktionellen Verbindungen des Molekulargewichtsbereichs 32 bis 399,

und

d) den aus der Polyurethanchemie an sich bekannten Hilfs- und Zusatzmitteln,

dadurch gekennzeichnet, daß man als Aufbaukomponenten b) und/oder c) oder als Teil der Aufbaukomponenten b) und/oder c) Verbindungen mit mindestens einer Sulfonatgruppe und mindestens zwei gegenüber Isocyanatgruppen reaktionsfähigen Gruppen in einer solchen Menge (mit)verwendet, daß die resultierenden Polyurethane einen Gehalt an chemisch eingebauten Sulfonatgruppen von 0,01 bis 3,0, vorzugsweise von 0,1 bis 2,0 Gew.-% aufweisen.

Gegenstand der Erfindung sind schließlich auch antistatisch ausgerüstete Schuhsohlen, dadurch gekennzeichnet, daß sie aus den erfindungsgemäßen Polyurethanformkörpern bestehen.

Ausgangsmaterialien a) für das erfindungsgemäße Verfahren sind beliebige organische Polyisocyanate, wie sie beispielsweise in der DE-PS 2 404 310, Kolonne 3, Zeile 39 bis Kolonne 4, Zeile 56 beispielhaft offenbart sind. Bevorzugt werden beim erfindungsgemäßen Verfahren organische Polyisocyanate mit ausschließlich aromatisch gebundenen Isocyanatgruppen einer (mittleren) NCO-Funktionalität von 2 bis 2,3 eingesetzt. Zu den besonders bevorzugten Polyisocyanaten gehören bei Raumtemperatur flüssige Polyisocyanate bzw. Polyisocyanatgemische der Diphenylmethan-Reihe, d.h. bei Raumtemperatur flüssige Gemische von 4,4'-Diisocyanatodiphenylmethan mit 2,4'-Diisocyanatodiphenylmethan und gegebenenfalls höherfunktionellen Homologen dieser Diisocyanate, bei Raumtemperatur flüssige, Carbodiimid- bzw. Uretonimin-modifizierte Derivate dieser Diisocyanate bzw. Polyisocyanatgemische, bei Raumtemperatur flüssige Urethan-modifizierte Derivate dieser Diisocyanate bzw. Polyisocyanatgemische, insbesondere solche der in DE-OS 2 624 526 beschriebenen Art, und bei Raumtemperatur flüssige Umsetzungsprodukte von 1 Mol 4,4'-Diisocyanatodiphenylmethan mit 0,05 bis 0,3 Mol eines oder mehrerer niedermolekularer Diole oder Triole, vorzugsweise Polypropylenglykole mit einem Molekulargewicht bis zu 700, wie sie beispielsweise gemäß DE-OS 1 618 380 zugänglich sind. Auch NCO-Semiprepolymere auf Basis von 4,4'-Diisocyanatodiphenylmethan oder den zuletztgenannten besonders bevorzugten Polyisocyanaten und Polyhydroxylverbindungen der nachstehend unter b) beispielhaft genannten Art können als Ausgangsmaterialien a) beim erfindungsgemäßen Verfahren eingesetzt werden. Unter "NCO-Semiprepolymeren" sind in diesem Zusammenhang Umsetzungsprodukte der genannten Einzelkomponenten in einem NCO/OH-Äquivalentverhältnis von 2,2:1 bis 20:1, vorzugsweise 3:1 bis 10:1 zu verstehen.

Bei der Ausgangskomponente b) handelt es sich um mindestens eine Verbindung mit mindestens zwei gegenüber Isocyanatgruppen reaktionsfähigen Wasserstoffatomen und einem, aus der Funktionalität und dem Gehalt an gegenüber Isocyanatgruppen reaktionsfähigen Gruppen berechenbaren (durchschnittlichen) Molekulargewicht von 400 bis 20 000, vorzugsweise 1000 bis 7000 und insbesondere 2000 bis 6000. Besonders bevorzugt werden als Ausgangskomponente b) di- und/oder trifunktionelle Polyetherpolyole eingesetzt. Diese Polyetherpolyole werden in bekannter Weise beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z.B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre

OH-Gruppen aufweisen.

Als Ausgangskomponente b) kommen auch die sogenannten Aminopolyether oder Aminohydroxypolyether des obengenannten Molekulargewichtsbereichs in Betracht, deren endständige, gegenüber Isocyanatgruppen reaktionsfähige Gruppen zumindest zu 25, vorzugsweise zu 50, und insbesondere zu 80-100 Äquivalentprozent aus primären und/oder sekundären, aromatisch oder aliphatisch gebundenen Aminogruppen und zum Rest aus primären und/ oder sekundären, aliphatisch gebundenen Hydroxylgruppen bestehen.

In diesen Verbindungen können die die Aminogruppen tragenden, endständigen Reste mit der Polyetherkette auch über Urethan- oder Estergruppen verknüpft sein. Die Herstellung dieser "Aminopolyether" erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäß als Komponente b) geeigneten Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen aufweisende Verbindungen.

Ebenfalls einsetzbar sind andere Aminopolyether des obengenannten Molekulargewichtsbereichs, wie sie beispielsweise gemäß DE-OS 2 948 419 oder gemäß DE-OS 3 039 600 erhalten werden können.

Selbstverständlich können als erfindungsgemäße Ausgangskomponente b) auch beliebige Gemische der beispielhaft genannten Verbindungen mit gegenüber Isocyanatgruppen reaktionsfähigen Gruppen eingesetzt werden.

Die erfindungsgemäß als Ausgangskomponente b) in Betracht kommenden Verbindungen mit gegenüber Isocyanatgruppen reaktionsfähigen Gruppen sind nicht auf die oben beispielhaft erwähnten Verbindungen begrenzt.

So können beispielsweise beim erfindungsgemäßen Verfahren alle in der US-PS 4 218 543 beispielhaft beschriebenen Verbindungen mit gegenüber Isocyanatgruppen reaktionsfähigen Gruppen des Molekulargewichtsbereichs 400 bis 12 000 eingesetzt werden.

Bei den gegebenenfalls mitzuverwendenden Ausgangsverbindungen c) handelt es sich um beliebige, mindestens zwei primäre bzw. sekundäre Aminogruppen und/oder Hydroxylgruppen aufweisende Kettenverlängerungsmittel bzw. Vernetzungsmittel des Molekulargewichtsbereichs 32 (Hydrazin) bis 399. Vorzugsweise werden die entsprechenden difunktionellen Verbindungen eingesetzt.

Als Beispiele für derartige Verbindungen seien genannt: Hydrazin, Ethylendiamin, Hexamethylendiamin, 1-Amino-3,3,5-trimethyl-5-aminomethyl-cyclohexan (IPDA), N,N'-Dimethylhydrazin, Ethylenglykol, Propylenglykol-(1,2) und -(1,3), 1,4-Dihydroxybutan, 1,6-Dihydroxyhexan, Glycerin, Trimethylolpropan, Pentaerythrit, Chinit, Mannit, Diethylenglykol, Triethylenglykol, Tetraethylenglykol, Dipropylenglykol, Tripropylenglykol, Dibutylenglykol, Diethanolamin, Diisopropanolamin, 1,4-Diaminobenzol, 2,4-Diaminotoluol oder 4,4'-Diaminodiphenylmethan.

Zu den bevorzugten, beim erfindungsgemäßen Verfahren als Komponente c) einzusetzenden Verbindungen gehören diprimäre aromatische Diamine, deren Molekulargewicht innerhalb des obengenannten Bereichs liegt, und die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 4, vorzugsweise 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche bevorzugten bzw. besonders bevorzugten Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, beliebige technische Gemische der letztgenannten beiden Diamine, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan, 3,5-Diethyl-3',5'-diisopropyl-4,4'-diaminodiphenylmethan, 1-t-Butyl-3,5-dimethyl-2,4-diaminobenzol, 1-t-Butyl-3,5-dimethyl-2,6-diaminobenzol oder beliebige technische Gemische der letztgenannten beiden Diamine.

Zu den bevorzugten erfindungsgemäß als Komponente c) einzusetzenden Verbindungen gehören außerdem aliphatische Diole des Molekulargewichtsbereichs 62 bis 200 wie z.B. Ethylenglykol, 1,2-Dihydroxypropan und 1,4-Dihydroxybutan. Beliebige Gemische alkoholischer

und/oder aminischer Aufbaukomponenten c) können selbstverständlich ebenfalls eingesetzt werden.

Die Aufbaukomponente c) kommt beim erfindungsgemäßen Verfahren in Mengen von 0 bis 50, vorzugsweise von 10 bis 40 Gew.-%, bezogen auf Komponente b) zum Einsatz.

Beim erfindungsgemäßen Verfahren können als gegebenenfalls mitzuverwendende Hilfs- und Zusatzstoffe d) beispielsweise die folgenden zum Einsatz gelangen:

1. Treibmittel wie z.B.: Aceton, Ethylacetat und insbesondere halogensubstituierte Alkane wie Dichlormethan, Trichlormethan, Monofluortrichlormethan, Chlordifluormethan oder Dichlordifluormethan. Die Mitverwendung von Wasser ist prinzipiell möglich, jedoch weniger bevorzugt.

2. Katalysatoren für die Isocyanat-Polyadditions-Reaktion der an sich bekannten Art, wie sie beispielsweise in US-PS 4 065 410, Kolonne 5, Zeile 59 bis Kolonne 6, Zeile 30 beschrieben sind.

3. Oberflächenaktive Additive und sonstige Zusatzstoffe, wie sie beispielsweise in US-PS 4 065 410, Kolonne 6, Zeile 34 bis Kolonne 7, Zeile 2 beschrieben sind.

4. Innere Formtrennmittel wie sie z.B. in US-PS 3 726 952, 4 033 912, 4 024 090, 4 058 492, 4 519 965 oder in GB-PS 1 365 215 oder 1 420 293 beschrieben sind.

Weitere Beispiele von gegebenenfalls erfindungsgemäß mitzuverwendenden oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendung- und Wirkungsweise dieser Zusatzmittel sind im Kunststoff-Handbuch, Band VII, herausgegeben von Vieweg und Höchtlen, Carl-Hanser-Verlag, München 1966, z.B. auf Seiten 103 - 113, beschrieben.

Grundsätzlich ist es auch möglich, bei der Durchführung des erfindungsgemäßen Verfahrens aus der Komponente a) und zumindest einem Teil der Komponente b) und/oder c) ein NCO-Prepolymer herzustellen und dieses in einer zweiten Reaktionsstufe mit der restlichen Menge der Komponenten b) bzw. c) zur Umsetzung zu bringen. Eine derartige zweistufige Arbeitsweise ist jedoch weniger bevorzugt.

Bei der Durchführung des erfindungsgemäßen Verfahrens wird die Menge der Komponente a) (Polyisocyanatkomponente) vorzugsweise so bemessen, daß im schäumfähigen Gemisch eine Isocyanat-Kennzahl von 70 bis 130, insbesondere 90 bis 110, vorliegt. Unter Isocyanat-Kennzahl versteht man hierbei den Quotienten aus Anzahl der Isocyanatgruppen und Anzahl der gegenüber Isocyanaten reaktiven Gruppen, multipliziert mit 100.

Erfindungswesentlich ist nun die (Mit)Verwendung von Aufbaukomponenten, die sowohl mindestens eine chemisch eingebaute Sulfonatgruppe als auch mindestns zwei gegenüber Isocyanatgruppen reaktionsfähige Gruppen aufweisen.

In Betracht kommen insbesondere die in US-PS 4 108 814 offenbarten, gegebenenfalls Ethergruppen aufweisenden Dihydroxysulfonate. Diese Verbindungen entsprechen der allgemeinen Formel

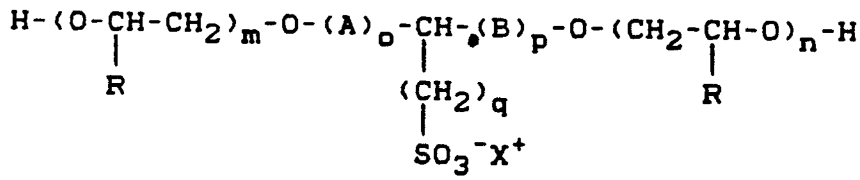

in welcher

A und B für gleiche oder verschiedene zweiwertige aliphatische Kohlenwasserstoff-Reste mit 1 - 6 Kohlenstoffatomen stehen,

R für Wasserstoff, einen aliphatischen Kohlenwasserstoff-Rest mit 1 bis 4 Kohlenstoffatomen oder einen Phenylrest steht,

$X^+$ für ein Alkalimetallkation oder eine gegebenenfalls substituierte Ammoniumgruppe steht,

n und m jeweils für Zahlen von 0 bis 20 stehen, mit der Einschränkung, daß die Summe m + n (im statistischen Mittel) maximal 30 beträgt,

o und p jeweils für 0 oder 1 stehen und

q für 0, 1 oder 2 steht.

Vorzugsweise werden solche Dihydroxysulfonate der genannten allgemeinen Formel eingesetzt, für welche

A und B für gleiche oder verschiedene zweiwertige aliphatische Kohlenwasserstoffreste mit einem oder zwei Kohlenstoffatome stehen,

R für eine Methylgruppe steht,

X für ein Natrium- oder Kaliumkation steht,

m und n für gleiche oder verschiedene Zahlen von 0 bis 4 stehen mit der Einschränkung, daß die Summe m + n bei 3 bis 5 liegt und

o, p und q die soeben genannten Bedeutungen haben.

Besonders bevorzugt sind solche Sulfonatdiole der allgemeinen Formel, für welche

A für einen Methylen-Rest steht,

B für einen 1,2-Ethylen-Rest steht,

$X^+$ für ein Natrium- oder Kaliumkation steht,

m und n für Zahlen von 0 bis 4 stehen, mit der Einschränkung, daß die Summe m + n bei 3 bis 5 liegt, o und p jeweils für 1 stehen und

q für 0 steht.

Bei der Durchführung des erfindungsgemäßen Verfahrens werden die Sulfonatgruppen aufweisenden Aufbaukomponenten in solchen Mengen mitverwendet, daß die resultierenden Polyurethane einen Gehalt an eingebauten Sulfonatgruppen, bezogen auf das Gewicht des Polyurethans ohne Einbeziehung von gegebenenfalls mitverwendeten inerten, nicht in das Polyurethan eingebauten Zusatzstoffen, von 0,01 bis 3,0, vorzugsweise 0,1 bis 2,0 Gew.-% aufweisen.

Bei Verwendung von Sulfonatgruppen aufweisenden Aufbaukomponenten der beispielhaft genannten Art mit einem unter 400 liegenden Molekulargewicht werden diese entweder als alleinige Kettenverlängerungsmittel c) oder zusammen mit den oben beispielhaft genannten Kettenverlängerungsmitteln c) eingesetzt. Die oben gemachten Ausführungen bezüglich der Menge der Aufbaukomponente c) gelten im Falle der Mitverwendung von derartigen niedermolekularen, Sulfonatgruppen aufweisenden Aufbaukomponenten für diese bzw. deren Gemische mit den anderen, oben beispielhaft genannten Aufbaukomponenten c).

Falls Sulfonatgruppen aufweisende Aufbaukomponenten der beispielhaft genannten Art mit einem über 399 liegenden Molekulargewicht eingesetzt werden, stellen diese im allgemeinen lediglich einen Teil der Komponente b) dar. Selbstverständlich ist es möglich, beim erfindungsgemäßen

Verfahren sowohl niedermolekulare als auch höhermolekulare, Sulfonatgruppen aufweisende Aufbaukomponenten gleichzeitig mitzuverwenden. Das Molekulargewicht der zum Einsatz gelangenden Sulfonatgruppen aufweisenden Aufbaukomponenten kann aus deren Funktionalität (im Sinne der Isocyanat-Additionsreaktion) und ihrem Gehalt an Hydroxyl- und gegebenenfalls Aminogruppen (im Falle der weniger bevorzugten Verwendung von Aminogruppen aufweisenden Sulfonaten) bestimmt werden.

Bei dem erfindungsgemäßen Verfahren werden die Ausgangsmaterialien einstufig in geschlossenen Formen, beispielsweise geschlossenen Metall- oder Kunststoff-Formen miteinander zur Umsetzung gebracht. Hierbei kommen im allgemeinen zwei Reaktionskomponenten zum Einsatz, wobei die Polyisocyanatkomponente a) die erste und die Komponente mit gegenüber Isocyanatgruppen reaktionsfähigen Gruppen, d.h. die Komponente b) gegebenenfalls in Abmischung mit der Komponente c) die zweite Reaktionskomponente darstellen. Die gegebenenfalls mitzuverwendenden Komponenten d) werden im allgemeinen der Komponente b) zugemischt, jedoch kann es auch zweckmäßig sein, beispielsweise bei der Verwendung von Isocyanatgruppen aufweisenden Trennmitteln, diese vor der Durchführung des erfindungsgemäßen Verfahrens der Komponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemäßen Verfahrens gestatten, so daß eine Vormischung der Einzelkomponenten nicht erforderlich ist. Die Menge des in die Form eingebrachten, gegebenenfalls schaumfähigen Gemischs

wird im übrigen so bemessen, daß die Formkörper eine Dichte von 0,1 - 1,4 $g/cm^3$, vorzugsweise 0,1 - 0,8 $g/cm^3$, insbesondere 0,2 - 0,6 $g/cm^3$ aufweisen. Bei der Mitverwendung von mineralischen Füllstoffen können Formkörper mit einer über 1,0 $g/cm^3$ liegenden Dichte resultieren. Die im allgemeinen eine homogene, weitgehend fehlerlose Oberfläche aufweisenden Formkörper können nach einer Formstandzeit von 5 bis 600, vorzugsweise 10 bis 360 Sekunden entformt werden. Als Ausgangstemperatur des in die Form eingebrachten Gemischs wird im allgemeinen eine Temperatur zwischen 10 und 60°C, vorzugsweise 20 bis 50°C, gewählt. Die Temperatur der Form beträgt im allgemeinen 40 bis 140°C, vorzugsweise 50 bis 100°C und insbesondere 50 bis 70°C.

Die Frage, ob beim erfindungsgemäßen Verfahren Schaumstoffe mit geschlossener Außenhaut, d.h. Formkörper einer unter 0,6 $g/cm^3$ liegenden Rohdichte oder mikrozellulare Formkörper, d.h. solche einer über 0,6 $g/cm^3$ liegenden Rohdichte resultieren, hängt von der Menge der mitverwendeten Treibmittel und der Menge des in die Form eingebrachten Reaktionsgemisches ab. Die Rohdichte der Formkörper kann somit durch geeignete Variation dieser Variablen eingestellt werden. Vorzugsweise erfolgt die Verarbeitung nach der bekannten Reaktionsspritzgußtechnik (RSG-Verfahren). Es handelt sich hierbei um eine Fülltechnik, bei der die hochaktiven, flüssigen Ausgangskomponenten über Hochdruckdosieraggregate mit großer Austragsleistung nach Vermischen in sogenannten zwangsgesteuerten Mischköpfen in kürzester Zeit in die Form eingespritzt werden.

Das erfindungsgemäße Verfahren eignet sich bei geeigneter Wahl der Ausgangsverbindungen und deren Mengenverhältnissen zur Herstellung von harten mikrozellularen Formkörpern oder zur Herstellung von weichen bis harten Integralformstoffen.

Vorzugsweise werden Art und Mengenverhältnisse der Ausgangsverbindungen und die Menge des in die Form eingebrachten Reaktionsgemisches so gewählt, daß zellförmige Formkunststoffe auf Polyurethanbasis mit einer kompakten Oberfläche einer Rohdichte von 0,2 bis 0,6 g/cm³ und einer Shore A-Härte gemäß DIN 53 505 von 40 bis 70 resultieren. Derartige Polyurethankunststoffe stellen besonders wertvolle Rohmaterialien für Schuhsohlen dar. Die erfindungsgemäßen, antistatisch ausgerüsteten Schuhsohlen können beispielsweise durch Ausschneiden aus einem erfindungsgemäßen plattenförmigen Formkunststoff erhalten werden. Vorzugsweise werden die Schuhsohlen jedoch unter Verwendung von den Schuhsohlen entsprechenden Formen erhalten. Eine besonders bevorzugte Variante hierbei besteht darin, die Schuhsohle in an sich bekannter Weise direkt an das Schuhoberteil anzuschäumen. In einem solchen Falle stellt das Schuhoberteil die obere Begrenzung der Schuhsohlenform dar.

Weitere mögliche Einsatzgebiete für die erfindungsgemäßen Formkörper auf Polyurethanbasis sind beispielsweise Automobil-Karrosserieelemente, Elemente der Automobil-Innenausstattung, Kunststoffmöbel, Sportartikel, Abdeckungen und Gehäuse von elektronischen Vorrichtungen wie Telekommunikationssystemen, Computern und Zeitsystemen, bei denen Entladungen von statischer Elektrizität zu schweren Fehlern und Gerätebeschädigungen führen können.

Reaktionsgemische der erfindungsgemäß einzusetzenden Art können auch zur Herstellung von beliebigen, frei verschäumten Schaumstoffen eingesetzt werden. So eignen sich die schaumfähigen Gemische beispielsweise auch zur Beschichtung von Stegen und von Profilen.

In den nachfolgenden Beispielen beziehen sich alle Prozentangaben auf Gewichtsprozente und alle Angaben in "Teilen" auf Gewichtsteile.

Beispiele

Beispiel 1

Rezeptur:

Polyol-Komponente:

75 Teile eines Polyetherdiols der OH-Zahl 28, hergestellt durch Propoxylierung von Propylenglykol und anschließende Ethoxylierung des Propoxylierungsprodukts (PO:EO-Gewichtsverhältnis = 80 : 20):

15 Teilen eines Polyethertriols der OH-Zahl 35, hergestellt durch Propoxylierung von Trimethylolpropan und anschließende Ethoxylierung des Propolylierungsprodukts (PO:EO-Gewichtsverhältnis = 87 : 13):

10 Teile Butandiol-1,4:

0,5 Teile Ethylenglykol:

6 Teile Trichlorfluormethan:

0,5 Teile Triethylendiamin:

0,02 Teile Dibutylzinndilaurat:

0,15 Teile Wasser

®Catafor CA 100 der Firma ABM Chemicals Ltd., (Tetraalkylammoniumsalz der Ethylschwefelsäure):

"Sulfonatdiol" (Additionsprodukt von Natriumhydrogensulfit an tetrapropolyliertes Buten-2-diol-1,4, OH-Zahl ca. 260)

| | Bsp. 1a (z.Vgl.) | Bsp. 1b (z.Vgl.) | Bsp. 1c (erfindungsgemäß) |
|---|---|---|---|
| Catafor (Tle) | - | 5 | - |
| "Sulfonatdiol" (Tle) | - | - | 5 |

Isocyanat-Komponente:

50 Teile eines NCO-Semiprepolymers des NCO-Gehaltes 23 %, hergestellt durch Umsetzung von Diphenylmethan-4,4'-diisocyanat mit Tripropylenglykol.

Polyol- und Isocyanatkomponente werden bei Raumtemperatur intensiv maschinell miteinander verrührt, in ein Aluminiumklappwerkzeug mit einem Formnest der Maße 20 x 20 x 1 cm eingetragen (Formtemperatur 60°C) und nach 5 min entformt. Die Forminnenwände wurden zuvor mit einem handelsüblichen äußeren Trennmittel (P 180 der Firma Acmos, Bremen) beschichtet.

Daten:

| | 1a | 1b | 1c | |
|---|---|---|---|---|
| Dichte (DIN 53420) | 550 | 550 | 550 | $kg/m^3$ |
| Härte Shore A (DIN 53505) | 76 | 68 | 74 | - |
| Isolationswiderstand (DIN 4843) | $5.10^9$ | $3.10^7$ | $4.10^7$ | Ω |

Beispiel 2

Rezeptur:

Polyolkomponente

90 Teile eines Polyesterdiols der OH-Zahl 56 aus Adipinsäure, Butandiol-1,4 und Ethylenglykol (Molverhältnis Ethylenglykol:Butaniol-1,4 = 7:3)

12 Teile Butandiol-1,4

0,5 Teile Triethylendiamin

0,4 Teile Wasser

Catafor CA 100

Sulfonatdiol (wie in Beispiel 1)

| | Bsp. 2a (z.Vgl.) | Bsp. 2b (z.Vgl.) | Bsp. 2c (erfindungsgemäß) |
|---|---|---|---|
| Catafor CA 100 (Tle) | - | 5 | - |
| "Sulfonatdiol" (Tle) | - | - | 5 |

Isocyanat-Komponente

50 Teile Semiprepolymeres mit einem NCO-Gehalt von ca. 19%, aus 38 % des in der Polyolkomponente vorliegenden Polyesterdiols, 56 % Diphenylmethan-4,4'-diisocyanat und 6 % eines durch Uretonimin-Bildung modifizierten Diphenylmethan-4,4'-diisocyanats mit 30% NCO.

Polyol- und Isocyanatkomponente werden bei Raumtemperatur intensiv maschinell miteinander vermischt, in eine auf 60°C temperierte Aluminium-Klappform mit einem Formnest der Maße 20 x 20 x 1 cm eingetragen und nach 5 min Formstandzeit entformt. Als externes Trennmittel wurde P 180 der Fa. Acmos, Bremen, verwendet

| | 2a | 2b | 2c | |
|---|---|---|---|---|
| Dichte (DIN 53420) | 550 | 550 | 550 | $kg/m^3$ |
| Härte Shore A (DIN 53505) | 54 | 43 | 50 | - |
| Isolationswiderstand (DIN 4843) | $2.10^9$ | $2.10^7$ | $3.10^7$ | Ω |

Patentansprüche:

1. Gegebenenfalls zellförmige Formkunststoffe auf Polyurethanbasis mit einer kompakten Oberfläche, gekennzeichnet durch einen Gehalt an chemisch in das Polyurethangerüst eingebauten Sulfonatgruppen $-SO_3^-$ von 0,01 bis 3,0 Gew.-%.

2. Zellförmige Formkunststoffe auf Polyurethanbasis gemäß Anspruch 1, welche eine Dichte von 100 bis 800 $kg/m^3$ aufweisen, gekennzeichnet durch einen Gehalt an chemisch in das Polyurethangerüst eingebauten Sulfonatgruppen von 0,1 bis 2,0 Gew.-%.

3. Verfahren zur Herstellung von Formkunststoffen auf Polyurethanbasis gemäß Anspruch 1 und 2 durch Umsetzung eines Reaktionsgemisches in geschlossenen Formen bestehend aus

a) einer Polyisocyanatkomponente,

b) organischen Verbindungen mit gegenüber Isocyanatgruppen reaktionsfähigen Gruppen des Molekulargewichtsbereichs 400 bis 20 000,

gegebenenfalls

c) im Sinne der Isocyanat-Additionsreaktion mindestens difunktionellen Verbindungen des Molekulargewichtsbereichs 32 bis 399,

und

d) den aus der Polyurethanchemie an sich bekannten Hilfs- und Zusatzmitteln,

dadurch gekennzeichnet, daß man als Aufbaukomponenten b) und/oder c) oder als Teil der Aufbaukomponenten b) und/oder c) Verbindungen mit mindestens einer Sulfonatgruppe und mindestens zwei gegenüber Isocyanatgruppen reaktionsfähigen Gruppen in einer solchen Menge (mit)verwendet, daß die resultierenden Polyurethane einen Gehalt an chemisch eingebauten Sulfonatgruppen von 0,01 bis 3,0, vorzugsweise 0,1 bis 2,0 Gew.-% aufweisen.

4. Verfahren gemäß Anspruch 3, dadurch gekennzeichnet, daß man als Sulfonatgruppen aufweisende Aufbaukomponenten b) und/oder c) Verbindungen der Formel

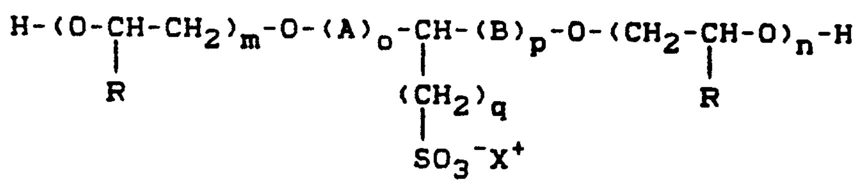

(mit)verwendet, wobei

A und B für gleiche oder verschiedene zweiwertige aliphatische Kohlenwasserstoff-Reste mit 1 - 6 Kohlenstoffatomen stehen,

R für Wasserstoff, einen aliphatischen Kohlenwasserstoff-Rest mit 1 bis 4 Kohlenstoffatomen oder einen Phenylrest steht,

$X^+$ für ein Alkalimetallkation oder eine gegebenenfalls substituierte Ammoniumgruppe steht,

m und n jeweils für Zahlen von 0 bis 20 stehen, mit der Einschränkung, daß die Summe m + n (im statistischen Mittel) maximal 30 beträgt,

o und p jeweils für 0 oder 1 stehen und

q für 0, 1 oder 2 steht.

5. Verfahren gemäß Anspruch 4, dadurch gekennzeichnet, daß man als Aufbaukomponenten b) und/oder c) Verbindungen der in Anspruch 4 genannten Formel (mit)verwendet, für welche

A für einen Methylenrest steht,

B für einen 1,2-Ethylenrest steht,

R jeweils für eine Methylgruppe steht,

$X^+$ für ein Natrium- oder Kaliumkation steht,

m und n jeweils für Zahlen von 0 bis 4 stehen, mit der Einschränkung, daß die Summe m + n (im statistischen Mittel) bei 3 bis 5 liegt und

q für 0 steht.

6. Antistatisch ausgerüstete Schuhsohlen, dadurch gekennzeichnet, daß sie aus Formkunststoffen auf Polyurethanbasis gemäß Anspruch 1 und 2 bestehen.

Europäisches Patentamt

# EUROPÄISCHER RECHERCHENBERICHT

0220411

Nummer der Anmeldung

EP 86 11 1691

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 388 856 (BAYER) * Ansprüche 1-3,6; Seite 4, Zeilen 1-6; Seite 26, Zeilen 12-36 * | 1-6 | C 08 G 18/08<br>C 08 G 18/50<br>C 08 G 18/38 |
| X | CH-A- 520 737 (BAYER) * Anspruch; Spalte 5, Zeilen 25-65; Spalte 7, Zeile 51 - Spalte 8, Zeile 13; Spalte 8, Zeilen 35-43; Beispiel 11 * | 1-3 | |
| D,A | US-A-4 108 814 (H. REIFF et al.) * Ansprüche 1,4; Spalte 8, Zeilen 38-53 * | 1 | |
| A | DE-A-2 207 357 (BAYER) * Anspruch 1; Seite 7, Absatz 1 * | 1 | RECHERCHIERTE SACHGEBIETE (Int. Cl.4) |
| A | FR-A-2 098 344 (BAYER) * Anspruch; Seite 5, Zeilen 24-29 * | 1 | C 08 G<br>A 43 B |

Der vorliegende Recherchenbericht wurde für alle Patentansprüche erstellt.

| Recherchenort | Abschlußdatum der Recherche | Prüfer |
|---|---|---|
| DEN HAAG | 12-01-1987 | VAN PUYMBROECK M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82